# FASCICULE DE BREVET EUROPEEN

(11) **EP 2 616 204 B1**
(45) Date de publication et mention de la délivrance du brevet: **17.04.2019**
(21) Numéro de dépôt: 11773486.3
(22) Date de dépôt: 06.09.2011
(51) Int. Cl.: B23C 5/08, E04B 1/84

(54) **PROCEDE ET DISPOSITIF POUR FABRIQUER UN PANNEAU ABSORBANT ACOUSTIQUE**
VERFAHREN UND VORRICHTUNG ZUR HERSTELLUNG EINER SCHALLDÄMMPLATTE
METHOD AND DEVICE FOR PRODUCING A SOUND ABSORBING PANEL

(30) Priorité: 14.09.2010 FR 1057295
(43) Date de publication de la demande: 24.07.2013
(73) Titulaire: Saint-Gobain Glass France, 92400 Courbevoie (FR)
(72) Inventeur: HUCHET, Gérard, F-60350 Autreches (FR)
(74) Mandataire: Saint-Gobain Recherche
(86) Numéro de dépôt international: PCT/FR2011/052030
(87) Numéro de publication internationale: WO 2012/035233

(56) Documents cités:
- EP-A1- 1 138 842
- WO-A1-97/27370
- CH-A5- 688 777
- DE-A1-102004 061 138
- DE-U1-202004 016 448
- FR-A- 1 454 270

## Description

L'invention concerne un procédé et un dispositif pour fabriquer un panneau absorbant acoustique en plastique muni d'une pluralité de fentes EP 1 138 842 A1 décrit un procédé pour fabriquer un panneau absorbant acoustique, comprenant les étapes suivantes :
- fourniture d'une plaque,
- formation d'une pluralité de fentes traversantes dans la plaque par fraisage par une pluralité de fraises,
- fixation de la plaque au moyen de maintien.

EP 1 138 842 A1 décrit également un dispositif pour fabriquer un panneau absorbant acoustique, comprenant :
- un moyen de maintien,
- au moins un arbre maintenu de façon rotative à au moins une de ses extrémités, le au moins un arbre portant une pluralité de fraises, chacune étant adaptée à former par fraisage au moins une fente traversante dans la plaque.

De tels panneaux absorbants acoustique sont bien connus et se posent dans les bâtiments en tant que cloison ou bien le long d'une cloison ou d'un plafond, avec ou sans espace par rapport à la cloison ou au plafond.

Les fentes d'un tel type de panneau absorbant acoustique sont généralement droites, ou encore oblongues ou en forme d'ondulation, de largeur typiquement comprise entre 0,1 et 2 mm.

Il est connu de former de telles fentes par gravure par laser. Toutefois, cette technique est très coûteuse et lente à mettre en oeuvre.

Il y a donc un besoin pour un procédé pour fabriquer un panneau absorbant acoustique qui soit rapide et peu coûteux.

Pour cela, l'invention propose un procédé pour fabriquer un panneau absorbant acoustique selon la revendication 1, comprenant notamment les étapes suivantes :
- fourniture d'une plaque en matériau plastique,
- formation d'une pluralité de fentes traversantes dans la plaque par fraisage par au moins une fraise.

Selon une autre particularité, dans l'étape de formation des fentes, la pluralité de fentes est formée par fraisage par une pluralité de fraises.

Selon une autre particularité, la plaque est en polyester thermoplastique linéaire, de préférence en polyéthylène téréphtalate glycol (PETG), ou encore en polyéthylène téréphtalate (PET) ou en polycarbonate (PC) ou en polyméthacrylate de méthyle (PMMA).

Selon une autre particularité, dans l'étape de formation des fentes, chaque fraise est arrosée avec de l'eau pour refroidir et nettoyer la fraise.

Selon une autre particularité, dans l'étape de formation des fentes, la plaque est positionnée de façon à ce que chaque fraise soit face à un seul endroit sur la plaque pour former une seule fente.

Selon une autre particularité, dans l'étape de formation des fentes, la plaque est positionnée de façon à ce que chaque fraise soit face à un premier endroit sur la plaque pour former une première fente puis, une fois la première fente formée, la plaque est éloignée de la ou des fraises et repositionnée de façon à ce que chaque fraise soit face à au moins à un deuxième endroit de la plaque de façon à former au moins une deuxième fente.

Selon une autre particularité, dans l'étape de formation des fentes, les fentes sont formées parallèlement les unes aux autres, sur une même ligne ou en quinconce.

Selon une autre particularité, dans l'étape de formation des fentes, une pluralité de fentes sont formées parallèlement à une direction puis une pluralité de fentes sont formées parallèlement à une autre direction différente de ladite direction.

Selon une autre particularité, le procédé comprend en outre, avant l'étape de formation des fentes, une étape de décor de la plaque avec de l'encre, de la peinture ou un vernis résistants à l'eau puis/ou une étape de revêtement de la plaque par un vernis anti-rayures.

L'invention concerne également un dispositif permettant de mettre en oeuvre le procédé décrit ci-dessus pour fabriquer un panneau absorbant acoustique selon la revendication 9, comprenant notamment:
- un moyen de maintien d'une plaque en matériau plastique,
- au moins un arbre maintenu de façon rotative à au moins une de ses extrémités, le au moins un arbre portant au moins une fraise adaptée à former par fraisage au moins une fente traversante dans la plaque.

Selon l'invention, le au moins un arbre porte une pluralité de fraises, chacune étant adaptée à former au moins une fente traversante dans la plaque.

Selon une autre particularité, le au moins un arbre est maintenu de façon rotative à ses deux extrémités.

Selon une autre particularité, le dispositif comprend en outre au moins deux jets d'eau associés à chaque fraise, chacun des jets d'eau étant adaptés à arroser la fraise respectivement par au-dessus et par en dessous.

Selon l'invention, le dispositif comprend en outre des moyens pour translater le moyen de maintien de la plaque selon une première et une deuxième directions, qui sont différentes.

Selon une autre particularité, les moyens pour translater le moyen de maintien de la plaque sont adaptés à translater le moyen de maintien de la plaque verticalement et horizontalement.

Selon l'invention, le moyen de maintien de la plaque est un panneau sur lequel est fixée la plaque, le panneau étant muni d'une pluralité de fentes aux endroits correspondants où des fentes doivent être formées dans la plaque.

Selon une autre particularité, les fraises portées par deux arbres adjacents sont disposées en ligne ou en quinconce.

L'invention concerne également une utilisation du dispositif décrit ci-dessus selon le procédé décrit ci-dessus pour fabriquer un panneau absorbant acoustique constitué d'une plaque en polyéthylène téréphtalate glycol ou en polyéthylène téréphtalate ou en polycarbonate ou en polyméthacrylate de méthyle, munie d'une pluralité de fentes de largeur comprise entre 0,2 et 0,4 mm avec un pourcentage de surface de fentes par rapport à la surface totale du panneau comprise entre 1,5 et 5 %.

D'autres caractéristiques et avantages de l'invention vont à présent être décrits en regard des dessins sur lesquels :
- La figure 1 représente une vue de côté d'un dispositif selon l'invention ;
- Les figures 2 et 3 représentent une vue de dessus d'un dispositif selon l'invention, avec des fraises respectivement alignées et en quinconce.

Les numéros de référence qui sont identiques sur les différentes figures représentent des éléments identiques ou similaires.

L'invention se rapporte à un procédé pour fabriquer un panneau absorbant acoustique muni d'une pluralité de fentes. Le procédé comprend une étape de fourniture d'une plaque en matériau plastique. Le procédé comprend également une étape de formation d'une pluralité de fentes traversantes dans la plaque par fraisage par au moins une fraise.

Le fraisage par au moins une fraise permet de rendre le procédé moins coûteux, une fraise étant bien meilleur marché qu'une tête laser. De plus, l'utilisation d'une fraise est plus simple que celle d'une tête laser, qui fait des découpes en suivant des trajectoires numérisées, ce qui permet de fabriquer plus rapidement le panneau absorbant acoustique.

L'invention se rapporte également à un dispositif pour fabriquer un panneau absorbant acoustique. Le dispositif permet de mettre en oeuvre le procédé selon l'invention.

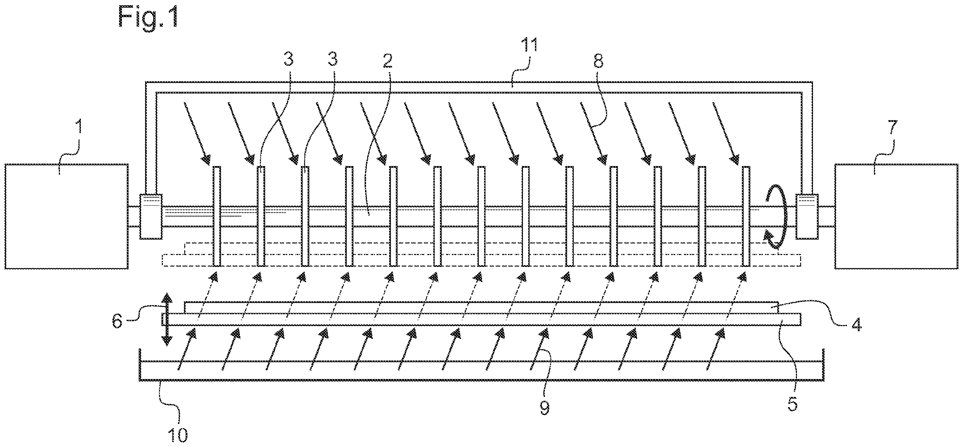

La figure 1 représente une vue de côté d'un dispositif selon l'invention,

Le dispositif comprend un boîtier 1 maintenant au moins un arbre 2 apte à tourner autour de son axe et sur lequel est montée au moins une fraise 3. Chaque arbre 2 est maintenu de façon rotative à une de ses extrémités au boîtier 1. La ou les fraises 3 sont de préférence montées sur chaque arbre 2 de façon à ce que le centre de la ou des fraises 3 soit sur l'axe de symétrie de l'arbre 2. Ainsi, lorsque chaque arbre 2 est en rotation autour de son axe, le boîtier 1 étant immobile, l'arbre 2 entraîne en rotation la ou les fraises 3 situées sur celui-ci. Le boîtier 1 comprend un moteur (non représenté) adapté à entraîner le ou les arbres 2 en rotation autour de leur axe, avec par exemple un système électronique de commande du moteur.

Une fraise 3 a sensiblement la forme d'un disque muni de dents. Chaque fraise 3 est adaptée à découper au moins une fente traversante dans une plaque 4 en plastique de façon à former un panneau absorbant acoustique muni d'une pluralité de fentes. Les fentes ont une largeur comprise entre 0,2 et 0,4 mm. La fraise 3 doit être choisie avec une épaisseur correspondant à la largeur de la fente souhaitée.

Le dispositif comprend en outre un moyen 5 de maintien d'une plaque 4 en matériau plastique (de préférence en polyéthylène téréphtalate glycol, ou encore en polyéthylène téréphtalate ou en polycarbonate ou en polyméthacrylate de méthyle). Le moyen de maintien 5 maintient la plaque 4 de façon à l'empêcher de bouger lorsque la ou les fraises 3 sont en train de former les fentes dans la plaque 4. Le moyen de maintien 5 est de préférence un panneau, par exemple en bois ou en matière plastique, sur lequel la plaque 4 est posée et maintenue fixée, pendant le temps de formation des fentes, par exemple par des brides et/ou des ventouses. Dans la suite de la description, on nommera le moyen de maintien « panneau », sans que ce soit à considérer comme une limitation.

Le panneau 5 est muni d'une pluralité de fentes préformées aux endroits correspondants où des fentes doivent être formées dans la plaque 4, ceci afin d'éviter que chaque fraise ait à former une fente à la fois dans la plaque 4 et dans le panneau du moyen de maintien 5. Le fait d'avoir un moyen de maintien sous forme de panneau permet de résister aux efforts exercés sur la plaque 4 lors du fraisage de façon à ce que la plaque 4 ne se déforme pas sous l'effet desdits efforts.

La plaque 4 est adaptée à être translatée selon une première direction (représentée sur la figure 1 par la flèche 6), qui est la direction perpendiculaire au plan de la plaque. Ainsi, la plaque la plaque 4 peut être déplacée vers la ou les fraises 3 afin que la ou les fraises puissent former des fentes dans la plaque. La plaque peut également être éloignée de la ou des fraises 3 lorsque l'opération de fraisage est terminée.

La plaque 4 est également adapté à être translatée selon une deuxième direction, qui est perpendiculaire à la première direction, et qui est parallèle au plan de la plaque 4. Cette deuxième direction correspond à la direction dans laquelle la fente doit être réalisée.

Les translations de la plaque 4 selon les première et deuxième directions sont réalisées par exemple grâce une table (non représentée) supportant le panneau 5 et la plaque 4, la table pouvant être translatée le long d'un premier axe parallèle à la première direction et selon un deuxième axe parallèle à la deuxième direction. Les mouvements de translation de la table selon la première et/ou la deuxième direction peuvent être réalisés soit manuellement, soit de façon motorisée, avec par exemple un système électronique de commande des mouvements de translation de la table pour réaliser le panneau absorbant acoustique muni de fentes.

De préférence, la plaque 4 est maintenue en position horizontale sur le moyen de maintien 5. L'arbre 2 est alors de préférence horizontal, avec une ou des fraises selon un plan vertical. La première direction de translation de la plaque 4 est alors verticale et la deuxième direction de translation de la plaque 4 est alors horizontale.

L'amplitude de translation de la plaque 4 selon la première direction doit être suffisante à la fois pour former une fente traversante dans la plaque 4 et pour pourvoir placer et dégager sans difficultés la plaque 4 dans le dispositif. La plaque 4 peut être positionnée entre deux positions extrêmes : une position de repos, position dans laquelle la plaque peut être retirée ou placée sans difficultés pour l'utilisateur, et une position de travail (en pointillés sur la figure 1), dans laquelle la ou les fraises traversent complètement la plaque 4 pour former les fentes. Dans la position de travail, la ou les fraises traversent également au moins une partie des fentes du panneau 5.

L'amplitude de translation de la plaque 4 selon la deuxième direction doit être adaptée à la longueur des fentes que l'on souhaite réaliser, c'est-à-dire une longueur d'au moins 40 mm. Dans le cas où plusieurs rangées de fentes doivent être réalisées dans la plaque par la ou les fraises 3 d'un unique arbre 2, l'amplitude de translation de la plaque 4 selon la deuxième direction doit être au moins de la largeur ou de la longueur d'une plaque 4, par exemple 1 m pour une plaque carrée de 1 m², de façon à pourvoir réaliser les différentes rangées de fentes dans un panneau avec un dispositif selon l'invention sans avoir à repositionner la plaque 4 différemment sur la table en cours de fraisage de la plaque 4.

Dans la présente description, on appelle rangée de fentes une suite de fentes réalisées par les fentes d'un seul arbre, les fraises étant disposées perpendiculairement à l'arbre.

Notons que dans le cas où plusieurs rangées de fentes doivent être réalisées dans la plaque par une unique fraise 3 d'un unique arbre 2, la fraise doit être déplacée sur l'arbre 2 entre deux opérations de fraisage de deux fentes d'une même rangée.

Chaque fraise 3 est adaptée à former une seule fente ou bien une pluralité de fentes dans la plaque 4. Toutefois, plus il y a de fraises sur l'arbre 2, plus l'opération de fraisage est rapide car plusieurs fentes peuvent être réalisés simultanément. Ainsi, l'arbre 2 peut porter une seule fraise 3, ou bien deux fraises 3, ou bien une pluralité de fraises.

De préférence, le dispositif selon l'invention comprend au moins deux arbres 2, parallèles l'un à l'autre, et de manière encore préférée une pluralité d'arbres 2 parallèles les uns aux autres, de façon à augmenter la vitesse de fabrication d'un panneau absorbant acoustique muni de fentes. Chaque arbre 2 porte une seule fraise 3, ou bien deux fraises 3, ou bien une pluralité de fraises.

La longueur d'une fente est définie comme étant la plus grande longueur de la fente sur toute l'épaisseur de la fente, et donc de la plaque. En effet, la fraise étant en forme de disque, les extrémités de la fente peuvent ne pas avoir des bords verticaux mais courbes, du même rayon de courbure que la fraise. La longueur des fentes est de préférence telle que le rapport de la surface des fentes d'une plaque sur la surface totale de la plaque est compris entre 1,5 et 5 %. Cela représente par exemple, pour une plaque carrée de 1 m², 1000 fentes de 10 cm de longueur et de 0,2 mm de largeur, avec 10 mm entre deux rangées de fentes et 9,8 mm entre deux fentes d'une même rangée. Il faut trouver un bon compromis pour la longueur des fentes, de façon à ce que la solidité mécanique du panneau ne soit pas affectée. Dans ce cas-là, le dispositif comprend de manière préférée neuf arbres portant chacun 99 fraises si un espace de 9,9 mm est laissé à chaque extrémité de chaque rangée de fentes par rapport au bord et un espace de 0,5 cm est laissé entre les rangées de fentes les plus proches du bord et le bord.

Le dispositif est adapté à réaliser des fentes de différentes longueurs sur une même plaque, notamment lorsque les fentes ne sont pas toutes réalisées en même temps.

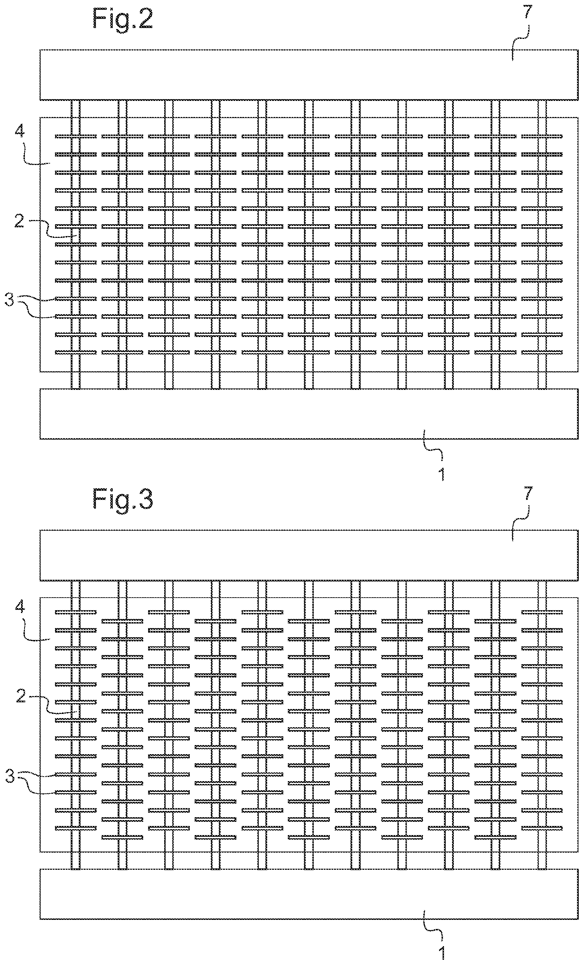

Lorsque le dispositif selon l'invention comporte au moins deux arbres, les fraises portées par deux arbres adjacents sont disposées alignées, comme cela est visible sur la figure 2, ou bien en quinconce, comme cela est visible sur la figure 3. Ainsi, les fentes sur le panneau absorbant acoustique peuvent être alignées ou en quinconce, ce qui permet d'adapter le motif en fonction des souhaits de l'utilisateur final.

La distance entre deux arbres 2 adjacents est de préférence constante sur tout le dispositif, de façon à avoir un motif régulier de fentes.

Le dispositif selon l'invention comprend de préférence un deuxième boîtier 7 adapté à maintenir de façon rotative par des paliers le ou les arbres 2 à leur extrémité opposée à cette maintenue par le boîtier 1. Le maintien du ou des arbres 2 à leurs deux extrémités permet d'éviter que le ou les arbres ne soient en porte-à-faux. Ce deuxième boîtier n'est pas motorisé.

Le dispositif comprend également au moins une paire de jets d'eau 8, 9, chaque paire de jets d'eau 8, 9 étant adaptée à arroser une seule fraise avec un jet d'eau 8 par au-dessus et un jet d'eau 9 par en dessous. L'arrosage par dessous se fait par exemple à travers les fentes réalisées dans le panneau 5, ou directement si la fraise a traversé la plaque 4 et le panneau 5. Le dispositif comprend par exemple un bac 10 rempli d'eau, disposé sous le moyen 5 de maintien de la plaque 4, qui sert de réservoir d'eau pour l'arrosage des fraises. Les jets d'eau 8 pour l'arrosage par-dessus proviennent par exemple de trous réalisés dans un tuyau 11 situé au-dessus de l'arbre 2. L'arrosage des fraises 3 par les jets d'eau 8 situés au-dessus du ou des arbres 2 permet d'empêcher l'échauffement des fraises, afin de ne pas endommager la plaque 4, et l'arrosage des fraises 3 par les jets d'eau 9 situés en dessous du ou des arbres 2 permet de nettoyer la denture des fraises, ce qui est particulièrement utile lorsque chaque fraise doit réaliser au moins deux fentes dans la même plaque.

En variante du mode de réalisation décrit ci-dessus, la plaque 4 est immobile et c'est le boîtier 1, et le cas échéant le boîtier 7, qui peuvent être translatés selon des directions verticale et horizontale.

L'invention concerne également le procédé de fabrication d'un panneau absorbant acoustique muni de fentes à l'aide du dispositif de l'invention.

Le procédé comprend une étape de fourniture d'une plaque 4 en matériau plastique. La plaque 4 en matériau plastique est en polyester thermoplastique linéaire, de préférence en polyéthylène téréphtalate glycol (PETG). Ce matériau est très résistant mécaniquement et bon marché. En variante, la plaque 4 en matériau plastique est en polyéthylène téréphtalate (PET) ou en polycarbonate (PC) ou en polyméthacrylate de méthyle (PMMA). La plaque 4 en matériau plastique peut être transparente, ce qui est avantageux pour réaliser par exemple des cloisons ou des plafonds qui doivent être transparents. En variante, la plaque en matériau plastique est colorée et/ou satinée et/ou diffusante. La plaque 4 en matériau plastique a de préférence une épaisseur comprise entre 4 et 5 mm.

Le procédé comprend également une étape de formation d'une pluralité de fentes traversantes dans la plaque 4 par fraisage par au moins une fraise 3.

La vitesse de rotation, la forme de la denture, l'angle d'affûtage et l'angle de coupe de la ou des fraises sont spécialement adaptées au matériau de la plaque dans laquelle les fentes sont à réaliser. Ainsi, pour une plaque en PETG, chaque fraise tourne par exemple à une vitesse de 400 tours par minute pour un diamètre de fraise de 80 mm.

La plaque 4 est fixée au moyen de maintien 5 du dispositif selon l'invention. Puis le ou les arbres 2 sont mis en rotation, entraînant en rotation les fraises 3. La plaque 4 est translatée selon la deuxième direction afin de la positionner de façon à ce que les fraises 3 soient au bon endroit par rapport à la plaque 4 pour réaliser les fentes. Puis la plaque 4 est translatée selon la première direction (perpendiculairement à la plaque), en direction des fraises 3, jusqu'à ce que la ou les fraises aient traversé l'épaisseur de la plaque 4 et au moins une partie de celle du panneau 5 (position de travail), puis la plaque 4 est translatée selon la deuxième direction (parallèlement à la plaque) jusqu'à ce que la longueur de la fente soit celle désirée. Puis, la plaque 4 est de nouveau translatée selon la première direction pour s'écarter des fraises 3. Dans le cas où le dispositif ne comprend qu'un seul arbre 2, la plaque 4 est alors translatée selon la deuxième direction pour la positionner de façon à ce que les fraises 3 soient positionnées à un deuxième endroit approprié par rapport à la plaque 4 pour réaliser d'autres fentes. Et ainsi de suite.

Chaque fraise peut former une seule fente ou plusieurs fentes. De préférence, toutes les fentes d'une plaque 4 sont de même largeur et de même longueur, sans que ce soit limitatif. Si le dispositif selon l'invention comporte un seul arbre 2, chaque fraise 3 formera plusieurs fentes. Si le dispositif selon l'invention comporte plusieurs arbres 2, chaque fraise 3 pourra ne former qu'une seule fente. Ainsi, la plaque peut être positionnée de façon à ce que chaque fraise 3 soit face à un seul endroit de la plaque pour former une seule fente. L'ensemble des fentes de la plaque 4 est alors réalisé simultanément, ce qui permet de fabriquer un panneau absorbant acoustique de manière très rapide, par exemple en dix secondes. Ou bien, la plaque peut être positionnée de façon à ce que chaque fraise 3 soit face à un premier endroit sur la plaque 4 pour former une première fente puis, une fois la première fente formée, la plaque est éloignée de la fraise pour être positionnée de façon à ce que la fraise soit face à un deuxième endroit de la plaque de façon à former une deuxième fente, et ainsi de suite jusqu'à former le nombre de fentes nécessaires.

Pendant l'étape de formation des fentes, les fentes sont formées parallèlement les unes aux autres, alignées ou en quinconce, selon la disposition des fraises qui sont elles-mêmes alignées ou en quinconce sur les différents arbres 2 du dispositif selon l'invention.

Le procédé selon l'invention permet de réaliser une pluralité de fentes parallèlement à une direction et une pluralité de fentes parallèlement à une autre direction, ces deux directions étant de préférence perpendiculaires l'une à l'autre. En effet, le procédé selon l'invention peut être utilisé une première fois pour réaliser un premier ensemble de fentes parallèles les unes aux autres, puis une deuxième fois, en tournant la plaque de 90° par exemple entre la première et la deuxième utilisation, pour réaliser un deuxième ensemble de fentes alors perpendiculaires aux fentes du premier ensemble de fentes. Ainsi, on peut obtenir un panneau absorbant acoustique avec des fentes en forme de croix. En variante, on peut réaliser des fentes en forme de chevrons.

Pendant la rotation des fraises, et en particulier pendant le fraisage des fentes, chaque fraise est arrosée avec deux jets d'eau pour refroidir et nettoyer la fraise, comme expliqué plus haut pour le dispositif.

Avant l'étape de formation des fentes, le procédé peut comprendre une étape de décor de la plaque avec de l'encre, de la peinture ou un vernis résistants à l'eau puis/ou une étape de revêtement de la plaque par un vernis anti-rayures. Le vernis anti-rayures est par exemple le produit Lipa commercialisé par la Société Zweko bvba.

L'invention concerne également l'utilisation de l'appareil selon l'invention pour fabriquer, selon le procédé selon l'invention, un panneau absorbant acoustique en polyéthylène téréphtalate glycol ou en polyéthylène téréphtalate ou en polycarbonate ou en polyméthacrylate de méthyle, muni d'une pluralité de fentes de largeur comprise entre 0,2 et 0,4 mm avec un pourcentage de surface de fentes par rapport à la surface totale du panneau comprise entre 1,5 et 5 %.

On appelle panneau absorbant acoustique une plaque 4 munie de fentes telles que décrites plus haut. Le panneau 5 est simplement un moyen de maintien de la plaque en cours de fabrication des fentes mais ne fait pas partie du panneau absorbant acoustique constitué de la plaque 4 munie des fentes.

Il est également décrit un panneau absorbant acoustique en polyéthylène téréphtalate glycol ou en polyéthylène téréphtalate ou en polycarbonate ou en polyméthacrylate de méthyle, muni d'une pluralité de fentes de largeur comprise entre 0,2 et 0,4 mm, avec un pourcentage de surface de fentes par rapport à la surface totale du panneau comprise entre 1,5 et 5 %. Le panneau absorbant acoustique est fabriqué selon le procédé de l'invention, au moyen du dispositif selon l'invention. Le panneau absorbant acoustique peut constituer ou faire partie d'une cloison ou d'un plafond, par exemple en étant fixé à une cloison ou à un plafond afin d'isoler acoustiquement une pièce, cette fixation pouvant être réalisée avec ou sans espace entre le panneau absorbant acoustique et la cloison ou le plafond. Le panneau absorbant acoustique est par exemple constitué d'une plaque carrée de 1 m², comprenant 1000 fentes de 10 cm de longueur et de 0,2 mm de largeur, avec 10 mm entre deux rangées de fentes et 9,8 mm entre deux fentes d'une même rangée. Une pluralité de panneaux de ce type devront être mis les uns à côté des autres afin de former une cloison ou un plafond isolant acoustiquement ou encore afin d'isoler une pièce par fixation sur une cloison ou un plafond existant.

L'invention permet ainsi de fabriquer un panneau absorbant acoustique de façon rapide et peu coûteuse, avec un dispositif simple et rapide d'utilisation, pour fabriquer un panneau performant acoustiquement qui est en plus bon marché.

## Revendications

1. Procédé pour fabriquer un panneau absorbant acoustique, comprenant les étapes suivantes :
- fourniture d'une plaque (4) en matériau plastique,
- formation d'une pluralité de fentes traversantes de largeur comprise entre 0,2 et 0,4 mm dans la plaque (4) par fraisage par une pluralité de fraises (3) par:
∘ fixation de la plaque (4) en matériau plastique à un moyen (5) de maintien, le moyen (5) de maintien étant un panneau muni d'une pluralité de fentes aux endroits correspondants où des fentes doivent être formées dans la plaque,
∘ translation du moyen (5) de maintien selon une première et une deuxième directions, qui sont différentes.

2. Procédé selon la revendication 1, dans lequel la plaque (4) est en polyester thermoplastique linéaire, de préférence en polyéthylène téréphtalate glycol (PETG), ou encore en polyéthylène téréphtalate (PET) ou en polycarbonate (PC) ou en polyméthacrylate de méthyle (PMMA).

3. Procédé selon la revendication 1 ou 2, dans lequel, dans l'étape de formation des fentes, chaque fraise (3) est arrosée avec de l'eau pour refroidir et nettoyer la fraise (3).

4. Procédé selon l'une des revendications 1 à 3, dans lequel, dans l'étape de formation des fentes, la plaque (4) est positionnée de façon à ce que chaque fraise (3) soit face à un seul endroit sur la plaque (4) pour former une seule fente.

5. Procédé selon l'une des revendications 1 à 3, dans lequel, dans l'étape de formation des fentes, la plaque (4) est positionnée de façon à ce que chaque fraise (3) soit face à un premier endroit sur la plaque (4) pour former une première fente puis, une fois la première fente formée, la plaque (4) est éloignée de la ou des fraises (3) et repositionnée de façon à ce que chaque fraise (3) soit face à au moins à un deuxième endroit de la plaque (4) de façon à former au moins une deuxième fente.

6. Procédé selon l'une des revendications 1 à 5, dans lequel, dans l'étape de formation des fentes, les fentes sont formées parallèlement les unes aux autres, sur une même ligne ou en quinconce.

7. Procédé selon l'une des revendications 1 à 6, dans lequel, dans l'étape de formation des fentes, une pluralité de fentes sont formées parallèlement à une direction puis une pluralité de fentes sont formées parallèlement à une autre direction différente de ladite direction.

8. Procédé selon l'une des revendications 1 à 7, comprenant en outre, avant l'étape de formation des fentes, une étape de décor de la plaque (4) avec de l'encre, de la peinture ou un vernis résistants à l'eau puis/ou une étape de revêtement de la plaque (4) par un vernis anti-rayures.

9. Dispositif permettant de mettre en oeuvre le procédé selon l'une quelconque des revendications 1 à 8 pour fabriquer un panneau absorbant acoustique, comprenant :
- un moyen (5) de maintien permettant de maintenir une plaque (4) en matériau plastique, ledit moyen (5) de maintien étant un panneau sur lequel est fixée la plaque (4), le panneau étant muni d'une pluralité de fentes aux endroits correspondants où des fentes doivent être formées dans la plaque,
- des moyens pour translater le moyen (5) de maintien selon une première et une deuxième directions, qui sont différentes.
- au moins un arbre (2) maintenu de façon rotative à au moins une de ses extrémités, le au moins un arbre (2) portant une pluralité de fraises (3), chacune étant adaptée à former par fraisage au moins une fente traversante de largeur comprise entre 0,2 et 0,4 mm dans la plaque (4).

10. Dispositif selon la revendication 9, dans lequel le au moins un arbre (2) est maintenu de façon rotative à ses deux extrémités.

11. Dispositif selon la revendication 9 ou 10, comprenant en outre au moins deux jets d'eau (8, 9) associés à chaque fraise (3), chacun des jets d'eau (8, 9) étant adaptés à arroser la fraise (3) respectivement par au-dessus et par en dessous.

12. Dispositif selon l'une des revendications 9 à 11, dans lequel les moyens pour translater le moyen (5) de maintien de la plaque (4) sont adaptés à translater le moyen (5) de maintien de la plaque (4) verticalement et horizontalement.

13. Dispositif selon l'une des revendications 9 à 12, dans lequel les fraises (3) portées par deux arbres (2) adjacents sont disposées en ligne ou en quinconce.

14. Utilisation du dispositif selon l'une des revendications 9 à 13, selon le procédé selon l'une des revendications 1 à 8, pour fabriquer un panneau absorbant acoustique constitué d'une plaque (4) en polyéthylène téréphtalate glycol ou en polyéthylène téréphtalate ou en polycarbonate ou en polyméthacrylate de méthyle, munie d'une pluralité de fentes de largeur comprise entre 0,2 et 0,4 mm avec un pourcentage de surface de fentes par rapport à la surface totale de la plaque (4) comprise entre 1,5 et 5 %.

## Patentansprüche

1. Verfahren zur Herstellung einer Schalldämmplatte, das die folgenden Schritte umfasst:
- Bereitstellen einer Platte (4) aus Kunststoffmaterial,
- Bilden einer Mehrzahl durchquerender Schlitze mit einer Breite zwischen 0,2 und 0,4 mm in der Platte (4) durch Fräsen durch eine Mehrzahl von Fräsen (3) durch:
∘ Befestigen der Platte (4) aus Kunststoffmaterial an einem Haltemittel (5), wobei das Haltemittel (5) eine Tafel ist, die mit einer Mehrzahl von Schlitzen an den entsprechenden Stellen, an welchen Schlitze in der Platte gebildet werden müssen, versehen ist,
∘ Verschieben des Haltemittels (5) entlang einer ersten und einer zweiten Richtung, die unterschiedlich sind.

2. Verfahren nach Anspruch 1, wobei die Platte (4) aus linearem Thermoplastpolyester ist, bevorzugt aus Polyethylenterephthalatglycol (PETG) oder auch aus Polyethylenterephthalat (PET) oder aus Polycarbonat (PC) oder aus Methylpolymethacrylat (PMMA).

3. Verfahren nach Anspruch 1 oder 2, wobei bei dem Bildungsschritt der Schlitze jede Fräse (3) mit Wasser besprüht wird, um die Fräse (3) zu kühlen und zu reinigen.

4. Verfahren nach einem der Ansprüche 1 bis 3, wobei bei dem Bildungsschritt der Schlitze die Platte (4) derart positioniert wird, dass jede Fräse (3) einer einzigen Stelle auf der Platte (4) gegenüberliegt, um einen einzigen Schlitz zu bilden.

5. Verfahren nach einem der Ansprüche 1 bis 3, wobei bei dem Bildungsschritt der Schlitze die Platte (4) derart positioniert wird, dass jede Fräse (3) einer ersten Stelle auf der Platte (4) gegenüberliegt, um einen ersten Schlitz zu bilden, dann, sobald der erste Schlitz gebildet ist, die Platte (4) von der oder den Fräsen (3) entfernt und derart neu positioniert wird, dass jede Fräse (3) mindestens einer zweiten Stelle der Platte (4) derart gegenüberliegt, dass mindestens ein zweiter Schlitz gebildet wird.

6. Verfahren nach einem der Ansprüche 1 bis 5, wobei bei dem Bildungsschritt der Schlitze die Schlitze parallel zueinander auf einer selben Linie oder versetzt gebildet werden.

7. Verfahren nach einem der Ansprüche 1 bis 6, wobei bei dem Bildungsschritt der Schlitze eine Mehrzahl von Schlitzen parallel zu einer Richtung gebildet wird, dann eine Mehrzahl von Schlitzen parallel zu einer anderen Richtung, die von der Richtung unterschiedlich ist, gebildet wird.

8. Verfahren nach einem der Ansprüche 1 bis 7, das außerdem vor dem Bildungsschritt der Schlitze einen Dekorschritt der Platte (4) mit Tinte, Anstrich oder einem Lack, die wasserfest sind, umfasst, dann/oder einen Beschichtungsschritt der Platte (4) durch einen Kratzschutzlack.

9. Vorrichtung, die das Verfahren nach einem der Ansprüche 1 bis 8 umsetzt, um eine Schalldämmplatte zu fertigen, umfassend:
- ein Haltemittel (5), das es erlaubt, eine Platte (4) aus Kunststoffmaterial zu halten, wobei das Haltemittel (5) eine Tafel ist, auf der die Platte (4) befestigt ist, wobei die Tafel mit einer Mehrzahl von Schlitzen an den entsprechenden Stellen versehen ist, an welchen die Schlitze in der Platte gebildet werden müssen,
- Mittel zum Verschieben des Haltemittels (5) entlang einer ersten und einer zweiten Richtung, die unterschiedlich sind,
- mindestens eine Welle (2), die drehend an mindestens einem ihrer Enden gehalten wird, wobei die mindestens eine Welle (2) eine Mehrzahl von Fräsen (3) trägt, die jeweils angepasst sind, um durch Fräsen mindestens einen durchgehenden Schlitz mit einer Breite, die zwischen 0,2 und 0,4 mm liegt, in der Platte (4) zu bilden.

10. Vorrichtung nach Anspruch 9, wobei die mindestens eine Welle (2) drehend an ihren zwei Enden gehalten wird.

11. Vorrichtung nach Anspruch 9 oder 10, die außerdem mindestens zwei Wasserstrahlen (8, 9) umfasst, die mit jeder Fräse (3) assoziiert ist, wobei jeder der Wasserstrahlen (8, 9) angepasst ist, um die Fräse (3) jeweils von oben und von unten her zu besprühen.

12. Vorrichtung nach einem der Ansprüche 9 bis 11, wobei die Mittel zum Verschieben des Haltemittels (5) der Platte (4) angepasst sind, um das Haltemittel (5) der Platte (4) vertikal und horizontal zu verschieben.

13. Vorrichtung nach einem der Ansprüche 9 bis 12, wobei die Fräsen (3), die von zwei nebeneinander liegenden Wellen (2) getragen werden, linear oder versetzt angeordnet sind.

14. Verwendung der Vorrichtung nach einem der Ansprüche 9 bis 13 gemäß dem Verfahren nach einem der Ansprüche 1 bis 8, um eine Schalldämmplatte herzustellen, die aus einer Platte (4) aus Polyethylenterephthalatglycol oder aus Polyethylenterephthalat oder aus Polycarbonat oder aus Methylpolymethacrylat besteht, die mit einer Mehrzahl von Schlitzen mit einer Breite zwischen 0,2 und 0,4 mm versehen ist, mit einem Oberflächenprozentsatz von Schlitzen bezüglich der Gesamtoberfläche der Platte (4), der zwischen 1,5 und 5 % liegt.

## Claims

1. A method for manufacturing an acoustic absorbent panel, comprising the following steps:
- provision of a sheet (4) of plastic material,
- formation of a plurality of through-slots with a width of between 0.2 and 0.4 mm in the sheet (4) by milling using a plurality of milling tools (3) by:
∘ fixation of the sheet (4) in plastic material to a means (5) for holding, the means for holding (5) being a panel provided with a plurality of slots at the corresponding points where slots have to be formed in the sheet,
∘ translation of the means (5) for holding according to a first direction and a second direction, which are different.

2. The method as claimed in claim 1, in which the sheet (4) is made of linear thermoplastic polyester, preferably of polyethylene terephthalate glycol (PETG), or even of polyethylene terephthalate (PET) or of polycarbonate (PC) or of polymethyl methacrylate (PMMA).

3. The method as claimed in claim 1 or 2, in which, in the slot formation step, each milling tool (3) is sprayed with water to cool and clean the milling tool (3).

4. The method as claimed in one of claims 1 to 3, in which, in the slot formation step, the sheet (4) is positioned so that each milling tool (3) is facing a single point on the sheet (4) to form a single slot.

5. The method as claimed in one of claims 1 to 3, in which, in the slot formation step, the sheet (4) is positioned so that each milling tool (3) is facing a first point on the sheet (4) to form a first slot then, once the first slot is formed, the sheet (4) is moved away from the milling tool or tools (3) and repositioned so that each milling tool (3) is facing at least one second point on the sheet (4) so as to form at least one second slot.

6. The method as claimed in one of claims 1 to 5, in which, in the slot formation step, the slots are formed parallel to one another, on one and the same line or staggered.

7. The method as claimed in one of claims 1 to 6, in which, in the slot formation step, a plurality of slots are formed parallel to one direction then a plurality of slots are formed parallel to another direction different from said direction.

8. The method as claimed in one of claims 1 to 7, also comprising, before the slot formation step, a step for decorating the sheet (4) with water-resistant ink, paint or varnish then/or a step for coating the sheet (4) with a scratch-proof varnish.

9. A device for implementing the method as claimed in any one of claims 1 to 8 for manufacturing an acoustic absorbent panel, comprising:
- a means (5) for holding a sheet (4) of plastic material, the means (5) for holding the sheet (4) being a panel to which the sheet (4) is fixed, the panel being provided with a plurality of slots at the corresponding points where slots have to be formed in the sheet,
- means for translating the means (5) for holding in a first and a second direction, which are different,
- at least one shaft (2) held so as to rotate at at least one of its ends, the at least one shaft (2) bearing a plurality of milling tools (3), each being suitable for forming at least one through-slot with a width of between 0.2 and 0.4 mm in the sheet (4).

10. The device as claimed in claim 9, in which the at least one shaft (2) is held so as to rotate at both its ends.

11. The device as claimed in claim 9 or 10, further comprising at least two water jets (8, 9) associated with each milling tool (3), each of the water jets (8, 9) being designed to spray the milling tool (3) respectively from above and from below.

12. The device as claimed in one of claims 9 to 11, in which the means for translating the means (5) for holding the sheet (4) are designed to translate the means (5) for holding the sheet (4) vertically and horizontally.

13. The device as claimed in one of claims 9 to 12, in which the milling tools (3) borne by two adjacent shafts (2) are arranged in line or staggered.

14. The use of the device as claimed in one of claims 9 to 13 according to the method as claimed in one of claims 1 to 8, to manufacture an acoustic absorbent panel consisting of a sheet (4) of polyethylene terephthalate glycol or of polyethylene terephthalate or of polycarbonate or of polymethyl methacrylate, provided with a plurality of slots with a width of between 0.2 and 0.4 mm with a percentage surface area of slots relative to the total surface area of the sheet (4) of between 1.5 and 5%.
